# EUROPEAN PATENT APPLICATION

(11) **EP 1 555 599 A1**
(43) Date of publication of application: **20.07.2005**
(21) Application number: 04250238.5
(22) Date of filing: 19.01.2004
(51) Int. Cl.: G06F 3/033

(54) **Display area position fixing**

(71) Applicant: Matsushita Electric Industrial Co., Ltd., Kadoma-shi, Osaka-fu, 571-8501 (JP)
(72) Inventor: Gordon, David George, Basingstoke Hants RG24 8UW (GB)
(74) Representative: Dawson, Elizabeth Ann

(57) **Abstract**

An algorithm, e.g. resident on a handset, allows the contents of the display to be moved and to fix the positions of any areas of the application display at any desired position within the handset display so that they remain visible.

## Description

The present invention relates to a method of displaying information in a data processing system. The invention has been developed for use with a mobile communications handset but may have other applications.

Handsets now allow download of applications, with fixed or variable display sizes. With many different handsets, with different fixed display sizes, it is inevitable that sometimes there will be a mismatch of display size between handset and application. Many techniques exist to view the larger application display through a smaller handset screen for example by the use of a mouse pointer or stylus combined with scroll bars or some other method of movement. Alternatively the application display can be scaled to fit the handset display, with the resultant loss of resolution.

There may be areas of the application display which it is desired to have always visible irrespective of which part of the application display is currently being viewed through the handset display. A mechanism to achieve this is described here.

### Prior Art

### Split Display

Some word processing applications, such as Microsoft Word and Microsoft Excel, allow the display to be split horizontally into two parts (Excel also allows a vertical split) and then each part is separately scrollable. This technique requires the presence of scroll bars.

### Tear-off Menus

Many applications allow part or all of their menu bar to be removed from the tope of the screen display and relocated anywhere on the screen. These are known as "tear-off menus".

### Multiple Windows

Window-based operating systems allow different windows to occupy separate parts of the screen, either overlapping or non-overlapping. They can also be moved around.

However, each window represents a different instance either of the application or the data being presented by the application.

### Summary of the invention

The present invention provides a method of displaying information in a data processing system including a visual display and an operating system, in which a user is provided with the option of designating an area being part of an area being viewed, to remain stationary on the display whilst the remainder of the viewed area is moveable.

In contrast to the "split display" described above, scroll bars are not required, thus allowing a greater part of the visible display to be available to display information.

The option to designate a part of a viewed area to remain visible may be provided as part of a menu. The same menu would usually provide the option to un-designate the designated area. The size of the designated area may be defined using a pointing device such as a cursor or stylus. In a particularly simple embodiment of the invention, a rectangular area of any desired size may be designated by the user defining its opposite comers using the pointing device. The designated area remains visible and superimposed on the visible area of the current application, and optionally of any other application that is running, until it is deleted. If the designated area contains changing information, such as the date or time, the displayed values of that information are preferably updated as it continues to be displayed. The designated area may be movable within the display area as a whole, for example to enable viewing of information which it has obscured.

An embodiment of the invention will now be described by way of example only and with reference to the accompanying drawings in which:
Figure 1 illustrates an example of an application in which the present invention would be useful; and
Figure 2 shows the application of figure 1 in which the invention is applied.

### Description

In the context of a display system on a handset where the images presented on the display screen can be moved around by any means, a mechanism is proposed whereby the user is able to identify and define areas of screen display which then become "fixed" in place on the handset display, preventing those areas from moving except as required by the user and allowing them to always be visible on the screen no matter what movement the rest of the display on the screen may be making. The user may identify each fixed area using the pointing device in combination with one or more keys.

Additionally, where the user has created one or more fixed areas on the screen, these fixed areas can be repositioned as desired using a combination of keys (to place the handset display in "reposition" mode) and pointer device (to identify the fixed area to be repositioned and its new position).

Finally, where the user has created one or more fixed areas on the screen, any of them can be erased as desired using a combination of keys (to place the handset display in "delete" mode) and pointer device (to identify the fixed area to be deleted).

To create a fixed area, the user places the handset in "Fixed Area Selection" mode using whatever mechanism is appropriate for the handset. The handset may invite the user to specify one comer of a fixed area. The user then places the cursor of the pointing device at a point on the handset screen to identify one comer of the fixed area. If the pointing device is a mouse, a mouse button may be pressed to select the position. Alternatively, a stylus may be "tapped" on the screen.

Next, the handset may invite the user to specify the opposite comer of the fixed area. The user selects another point on the handset screen as described above. This identifies the opposite comer of the fixed area and causes the display system to leave "Fixed Area Selection" mode and return to the mode it was in before entering "Fixed Area Selection" mode.

The rectangular area of the application display defined by the two points is now designated as a "Fixed Area", and can be manipulated according to the following rules.
- No matter what relative movement occurs between the handset display and the application display, the designated "Fixed Areas" such as the one in the example above, remain at a fixed position in the handset display.
- The "Fixed Area" can be moved by placing the cursor of the pointing device inside the fixed area and selecting a unique combination of one or more keys to place the display system in "Fixed Area Relocation" mode. In this mode, moving the cursor of the pointing device also moves the fixed area in the same way, allowing the fixed area to be relocated in the handset display. The fixed area may be partially off the handset display if desired. While in the "Fixed Area Relocation" mode, any existing handset display movement algorithm does not operate. Entering another combination of keys, which may be the same combination that caused the handset to enter this mode, causes the display system to leave "Fixed Area Relocation" mode, and return to the mode it was in before entering "Fixed Area Relocation" mode.
- If multiple fixed areas are designated, they may overlap, in the order in which they are created such that the last to be created overlays all the areas already created. If a previously created fixed area is relocated, it becomes the top visible area.
- Entering yet another combination of one or more keys will cause each overlapping area in turn to overlay all the others.
- An existing "Fixed Area" can be deleted by placing the cursor of the pointing device inside the fixed area and selecting a unique combination of one or more buttons. The fixed area is removed from the display and the system.

Alternatively the user, once "Fixed Area Selection" mode is entered, may place the pointer in the desired position for one of the comers of the rectangular area and then drag the pointer to the opposite comer without lifting the pointer.
In another alternative method, the user may trace the outline of the area he wishes to remain fixed on the display using the pointer device or mouse. The area identified in this way is not necessarily square or rectangular. However, it still obeys the rules identified above when manipulated.

Note that the fixed area may behave in the same way as the original area. If the data presented changes in real-time then the data presented in the fixed area also changes. If the fixed area responded to user-initiated cursor or stylus events or to textual input, the fixed area does too. Refer to the example below for further details.

### Example of display fixing

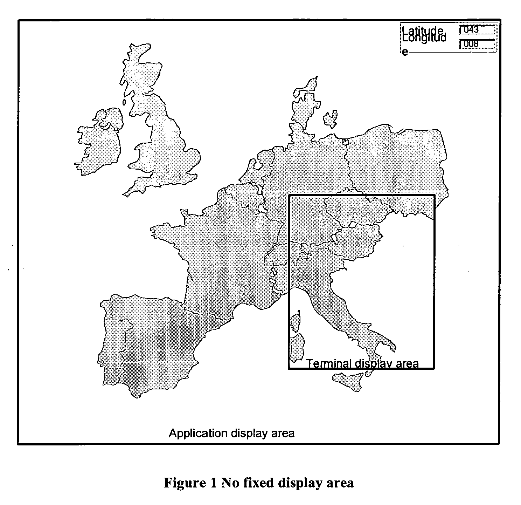

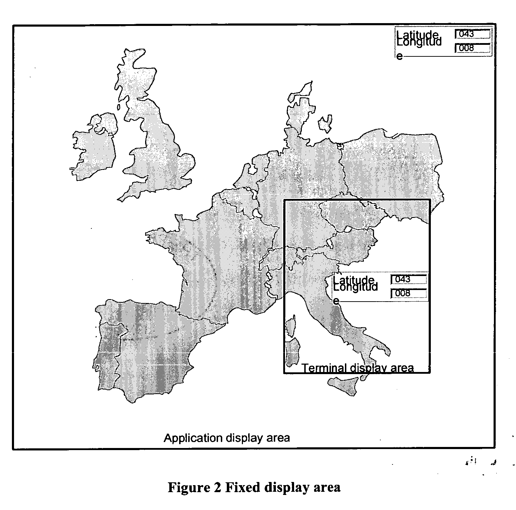

To illustrate how the display fixing method works, this example uses a hypothetical mapping application illustrated in figures 1 and 2. This application displays maps of regions of the world to varying scales, and also shows the latitude and longitude of the position of the cursor within the display.

The application has been designed to fit on a larger display than the handset provides, and the panel displaying the latitude and longitude is permanently fixed in the top right-hand comer.

Using a handset display movement algorithm, the part of the application display viewed on the handset display can be moved around using a variety of techniques. When this "viewing window" is moved around, the latitude and longitude panel is no longer in view. Figure 1 illustrates this situation.

In handsets which support the display position fixing technique according to this invention, the latitude and longitude panel can be detached or copied, and fixed in an appropriate position in the handset display, as shown in figure 2. Absent any movement of the panel by the user, the panel will remain in the same position in the handset display, and always be visible as the handset display is moved around.

In this example, the latitude and longitude values presented in the fixed area continue to reflect the values applicable to the current cursor position. Likewise, if the original latitude-longitude panel responded to user-initiated cursor or stylus actions, or allowed the user to enter latitude and longitude values (to select a region to be displayed), the fixed display area in the handset display would also allow these actions to be made and would respond in the same way.

One method by which the user can identify the area to be fixed is as follows.
The user moves the handset display so that the latitude/longitude panel is visible.
The user would enter the handset menu system using a key sequence dedicated for that purpose.
The user scrolls up and down the handset menu, making appropriate selections to reach a configuration menu for setting up a fixed display area.

At this stage a number of techniques are available to identify the latitude/longitude panel. The following are two possibilities:
1. The handset asks the user to identify the upper left comer of the area to be fixed. The user taps the cursor (or a stylus tap) at the top-left comer of the latitude/longitude panel.
   The handset asks the user to identify the lower right comer of the area to be fixed. The user taps the cursor (or a stylus tap) at the lower-right comer of the latitude/longitude panel.
   The handset asks the user to identify where the top-left comer of the panel is to be positioned in the handset display. The user taps a position on the handset display, and a copy of the latitude-longitude panel appears at that position.
2. The handset asks the user to identify the area to be fixed. The user places the cursor (or a stylus tap-and-hold) at the top-left comer of the latitude/longitude panel and drags the cursor to the bottom-right comer.
   The position of the panel is set the same way as the previous technique.
3. A possible extension to this technique would allow the user to identify a non-rectangular shape to be fixed, by dragging the cursor around the outline of the area to be fixed, and then positioning it as desired. If the final position of the cursor is not the same as the starting position, then the two points are joined by a straight line to completely enclose the area to be fixed.
   Regardless of the technique used, now when the handset display is moved within the application display, the latitude-longitude panel remains in the same position in the handset display.
   The fixed area can be "un-set" by entering the appropriate handset menu and selecting the fixed panel for "un-fixing".

It should be noted that the fixed area can be arranged to respond to user input such as cursor actions in exactly the same way as it would before being "fixed".

## Claims

1. A method of displaying information in a data processing system including a visual display and an operating system, in which a user is provided with the option of designating an area being part of an area being viewed, to remain on the display whilst the remainder of the viewed area is changeable.

2. A method as claimed in claim 1 in which the user option is provided as part of a menu.

3. A method as claimed in claim 1 or 2 in which the size of the designated area may be selected using a pointing device.

4. A method as claimed in claim 3 in which opposite comers of a rectangular area may be designated using the pointing device.

5. A method as claimed in any preceding claim in which a designated area being part of one application remains visible when the remainder of the viewed area is part of another application running on the operating system.

6. A method as claimed in any preceding claim in which if the designated area contains current information it continues to be updated as the area remains fixed.

7. A method as claimed in any preceding claim in which the designated area can be moved within the area of the visual display.

8. A method as claimed in any preceding claim in which a plurality of areas may be designated by the user to remain visible.

9. A method as claimed in claim 8 in which the plurality of areas are arranged in an overlapping configuration.

10. A method as claimed in claim 9 in which the most visible of the areas is the one mist recently designated.

11. A method as claimed in claim 9 in which each overlapping area is caused to overlay the other(s) in turn in response to a user operation.

12. A data processing system having means for carrying out the method of any preceding claim.

13. A portable communications terminal having a data processing system as claimed in claim 9.
